# EUROPÄISCHE PATENTANMELDUNG

(11) **EP 3 407 158 A1**
(43) Veröffentlichungstag der Anmeldung: **28.11.2018**
(21) Anmeldenummer: 18173971.5
(22) Anmeldetag: 24.05.2018
(51) Int. Cl.: G06F 1/16, A45C 13/00, A45C 11/00, H04B 1/3888

(54) **SCHUTZHÜLLE FÜR BILDSCHIRMGERÄTE UND MOBILTELEFON MIT EINER SOLCHEN SCHUTZHÜLLE**

(30) Priorität: 24.05.2017 DE 202017103168 U
(71) Anmelder: Aschenbrenner, Maximilian, 81679 München (DE); Aschenbrenner, Iris, 81679 München (DE)
(72) Erfinder: Aschenbrenner, Maximilian, 81679 München (DE); Aschenbrenner, Iris, 81679 München (DE)
(74) Vertreter: Thoma, Michael

(57) **Zusammenfassung**

Die vorliegende Erfindung betrifft eine Schutzhülle für flache Bildschirmgeräte, insbesondere in Form von Mobiltelefonen und Tablets, mit einer Hüllenbasis, die am Gerätekorpus befestigbar ist, sowie einer Bildschirmklappe, die an der Hüllenbasis um eine Basisklappachse, die sich entlang einer Schmalseite der Hüllenbasis erstreckt, klappbar befestigt und zum Abdecken des Bildschirms nach Art eines Buchdeckels auf den Bildschirm klappbar ist. Erfindungsgemäß weist die Bildschirmklappe zumindest einen ausklappbaren Klappenflügel auf, der um eine sich quer zur Basisklappenachse verlaufende Flügelklappachse ausklappbar an dem Klappenhauptteil der Bildschirmklappe angelenkt ist und lösbare Befestigungsmittel zum lösbaren Befestigen in seiner ausgeklappten Stellung an einer zweiten Schmalseite der Hüllenbasis und/oder des Gerätekorpus aufweist, so dass der Klappenflügel in seiner an der Schmalseite der Hüllenbasis und/oder des Gerätekorpus befestigten Arbeitsstellung den Klappenhauptteil in einer aufrechten, quer zur Bildschirmoberflächenebene stehenden Stellung hält und bei gelösten Befestigungsmitteln in eine flächig an das Klappenhauptteil anliegende Ruhestellung klappbar ist.

## Beschreibung

Die vorliegende Erfindung betrifft eine Schutzhülle für flache Bildschirmgeräte, insbesondere in Form von Mobiltelefonen und Tablets, mit einer Hüllenbasis, die am Gerätekorpus befestigbar ist, sowie einer Bildschirmklappe, die an der Hüllenbasis um eine Basisklappachse, die sich entlang einer Schmalseite der Hüllenbasis erstreckt, klappbar befestigt und zum Abdecken des Bildschirms nach Art eines Buchdeckels auf den Bildschirm klappbar ist. Die Erfindung betrifft ferner auch solche Bildschirmgeräte wie Mobiltelefone und Tablets mit einer solchen Schutzhülle.

Um empfindliche Bildschirmgeräte wie Handys oder Tablets bei Nicht-Gebrauch gegen Stöße, Verschmutzung oder anderer äußerer Einwirkungen zu schützen, ist es bekannt, die Geräte mit einer Schutzhülle zu versehen, die eine aufklappbare Bildschirmklappe besitzen. In der zugeklappten Ruhestellung liegt die Bildschirmklappe im Wesentlichen flächig auf dem Bildschirm des Geräts auf und deckt diesen im Wesentlichen vollständig ab, während in der aufgeklappten Betriebsstellung die Bildschirmklappe auf den Rücken des Geräts geschlagen oder einfach zur Seite geklappt sein kann. Die Bildschirmklappe ist hierzu klappbar mit der am Gerätekorpus befestigten Hüllenbasis verbunden, wobei sich die Basisklappachse, um die die Bildschirmklappe relativ zur Hüllenbasis abgeklappt werden kann, entlang einer langen Schmalseite des Bildschirmgeräts erstrecken kann, um - bei Halten des Geräts im Hochformat - die Klappe nach links oder rechts umschlagen zu können, oder auch entlang einer der kurzen Schmalseiten erstrecken kann, um die Bildschirmklappe nach oben oder unten wegklappen zu können.

Die Hüllenbasis kann das Mobiltelefon oder Tablet nach Art einer Wanne auf fünf Seiten umgeben und die Rückseite des Geräts im Wesentlichen vollständig abdecken. Alternativ kann die Hüllenbasis auch nach Art eines Rahmens ausgebildet sein, der nur die vier Schmalseiten des Geräts einfasst und nach Art eines Stoßschutzes abdeckt, während die Rückseite des Geräts teilweise oder ganz frei bleibt.

Ein Problem bei solchen Schutzhüllen ist es, dass sie zwar das Gerät recht gut vor Stößen und äußeren Beeinträchtigungen schützen, jedoch schlecht als Sonnenschutz oder Sichtschutz gegen neugierige Blicke verwendet werden können. Um bei beengten Platzverhältnissen wie im Zug, auf Konferenzen oder im Theater zu vermeiden, dass der jeweilige Platznachbar die abzurufenden Emails oder Bildschirmdarstellungen mitverfolgt, kann zwar die Bildschirmklappe mit der Hand als Abdeckung aufrecht oder schräg an der Geräteseite gehalten werden, was jedoch mühsam ist und die Fingerbedienung des Geräts beeinträchtigt. Auch bei schlechten Lichtverhältnissen wie grellem Sonnenschein ist es kaum möglich, den Bildschirm mit der Bildschirmklappe der Schutzhülle so weit abzuschatten, dass das Sonnenlicht die Sichtbarkeit des Bildschirms nicht mehr beeinträchtigt.

Aus der Schrift DE 20 2006 002 066 U1 ist ein Sonnenschutzschirm für Handydisplays bekannt, der einen mittels Saugnäpfen am Gerätekorpus befestigbaren Rahmen aufweist, mittels dessen ein nach Art einer Ziehharmonika ausgebildetes Rollo aufspannbar ist. Diese Sonnenschutzvorrichtung ist jedoch durch den Strebenrahmen recht sperrig und unhandlich zu bedienen, zudem bietet die Vorrichtung in der zusammengefahrenen Stellung kaum Schutz für das Gerät gegen Stöße, Verschmutzung und äußeren Beeinträchtigungen.

Aus der CN 103780720 A ist ferner ein Sonnenschutz für ein Handy bekannt, bei der eine Bildschirmklappe auf und zu klappbar an einer Schmalseite des Geräts befestigbar ist. An den rechten und linken Seitenrändern der Bildschirmklappe sind faltbare Vorhangelemente befestigt, die andererseits an linken und rechten Seitenrändern des Bildschirmgeräts befestigt sind, so dass sich die Vorhangelemente beim Aufklappen der Bildschirmklappe auffalten und beim Zuklappen der Bildschirmklappe wieder zusammenfalten. Beim Zusammenfalten dieser seitlichen Vorhangstücke legen sich diese jedoch nach Art einer Leporellofaltung mehrlagig übereinander und bilden eine recht dicke Wurst an den Rändern des Bildschirmgeräts, so dass sich die Bildschirmklappe nicht mehr richtig auf den Bildschirm legen lässt. Hierdurch wird zum einen das Bildschirmgerät mit der Umhüllung in dessen Ruheposition unhandlich dick, zum anderen kann Schmutz und Staub auch in der Ruheposition auf den Bildschirm gelangen, da die Bildschirmklappe nicht mehr vollständig flächig auf dem Bildschirm aufliegt und über den verbleibenden Spalt Schmutz und Staub eintreten kann.

Der vorliegenden Erfindung liegt daher die Aufgabe zugrunde, eine verbesserte Schutzhülle sowie ein mobiles Bildschirmgerät mit einer solchen verbesserten Schutzhülle zu schaffen, die Nachteile des Standes der Technik vermeiden und Letzteren in vorteilhafter Weise weiterbilden. Insbesondere soll die Schutzhülle in Arbeitsstellung einen effektiven und einfach handzuhabenden Sonnen- und Blickschutz bilden, gleichzeitig aber in Ruhestellung das Bildschirmgerät robust und zuverlässig vor Stößen, Schmutz und Staub und anderen äußeren Einwirkungen schützen.

Erfindungsgemäß wird die genannte Aufgabe durch eine Schutzhülle gemäß Anspruch 1 sowie ein Bildschirmgerät mit einer solchen Schutzhülle gemäß Anspruch 15 gelöst. Bevorzugte Ausgestaltungen der Erfindung sind Gegenstand der abhängigen Ansprüche.

Es wird also vorgeschlagen, an der Bildschirmklappe seitlich zumindest einen Klappenflügel anzubringen, der nach Art eines Türflügels aufklappbar und in einer näherungsweise rechtwinkligen Stellung zum Klappenhauptteil der Bildschirmklappe an der Hüllenbasis und/oder dem Gerätekorpus arretierbar ist, so dass der zumindest eine Klappenflügel zusammen mit dem Klappenhauptteil der Bildschirmklappe einen aufrecht stehenden, eigenstabilen Sonnen- und Blickschutz bilden, der das Bildschirmgerät an zumindest zwei Seiten einfasst und nach Art einer Einfassungswand seitlich gegenüber der Bildschirmoberfläche hochsteht. Erfindungsgemäß weist die Bildschirmklappe zumindest einen ausklappbaren Klappenflügel auf, der um eine sich quer zur Basisklappenachse verlaufende Flügelklappachse ausklappbar an dem Klappenhauptteil der Bildschirmklappe angelenkt ist und lösbare Befestigungsmittel zum lösbaren Befestigen in seiner ausgeklappten Stellung an einer zweiten Schmalseite der Hüllenbasis und/oder des Gerätekorpus aufweist, so dass der Klappenflügel in seiner an der Schmalseite der Hüllenbasis und/oder des Gerätekorpus befestigten Arbeitsstellung den Klappenhauptteil in einer aufrechten, quer zur Bildschirmoberflächenebene stehenden Stellung hält und bei gelösten Befestigungsmitteln in eine flächig an das Klappenhauptteil anliegende Ruhestellung klappbar ist. Die Flügelklappachse erstreckt sich also näherungsweise senkrecht zur Basisklappachse, so dass zunächst die Bildschirmklappe mit noch angeklapptem Seitenflügel, also Klappenhauptteil und Seitenflügel gemeinsam um die Basisklappachse aufgerichtet bzw. ausklappt werden können und sodann der Seitenflügel um die dazu quer verlaufende Flügelklappachse seitlich ausgeklappt werden kann. In der ausgeklappten Stellung kann der Seitenflügel dann lösbar am seitlichen Rand der Hüllenbasis und/oder des Gerätekorpus lösbar befestigt werden, um eine eigenstabile, selbststehende Sicht- und Sonnenlichtschutzwand um den Bildschirm herum zu bilden.

In vorteilhafter Weiterbildung der Erfindung können an dem Klappenhauptteil der Bildschirmklappe zwei seitliche Klappflügel vorgesehen sein, die rechts und links vom Klappenhauptteil um jeweils quer zur Basisklappachse verlaufende Flügelklappachsen ausgeklappt werden können, die sich im Bereich der Geräteecken bzw. Schutzhüllenbasisecken erstrecken und fest am Klappenhauptteil angeordnet sind, um mit dem Klappenhauptteil um die Basisklappachse, zu der sie sich näherungsweise senkrecht erstrecken, aus- und eingeklappt zu werden. Dabei sind vorteilhafterweise auch für den zweiten Klappflügel lösbare Befestigungsmittel vorgesehen, um den zweiten Klappflügel ebenfalls an einer Schmalseite der Hüllenbasis und/oder des Gerätekorpus lösbar befestigen zu können, wenn sich der Arbeitsflügel in seiner ausgeklappten Arbeitsstellung näherungsweise parallel zu einer dritten Schmalseite der Hüllenbasis bzw. des Gerätekorpus erstreckt, die an die erste Schmalseite, an der sich die Basisklappachse erstreckt, angrenzt und dazu näherungsweise senkrecht erstreckt.

Bei einer solchen Ausbildung mit zwei seitlichen Klappflügeln kann der Bildschirm des Mobiltelefons bzw. Tablets in der ausgeklappten Arbeitsstellung entlang dreier Seiten durch einen Sonnen- bzw. Blickschutzwall umschlossen werden, der seitlich von der Bildschirmoberfläche hochsteht und durch den Klappenhauptteil und die beiden seitlichen Klappflügel gebildet wird.

Um in der Ruhestellung den Bildschirm sicher zu schützen, gleichzeitig aber nicht dick aufzutragen bzw. die Dicke des mit der Schutzhülle versehenen Bildschirmgeräts über die Maßen zu erhöhen, sind die seitlichen Klappflügel vorteilhafterweise derart konfiguriert, dass die Klappflügel in ihrer Ruhestellung flächig an den Klappenhauptteil der Bildschirmklappe angeklappt sind und mit diesem zusammen flächig auf der Bildschirmoberfläche aufliegen. Die seitlichen Klappflügel doppeln dabei den Klappenhauptteil auf, so dass die Schutzwirkung gegen Stöße und Schläge erhöht wird. Vorteilhafterweise sind die Klappenflügel dabei mit ihrer gesamten, maximalen Fläche auf den Klappenhauptteil gelegt, um den doppelt geschützten Flächenbereich möglichst groß zu machen und gleichzeitig ein mehrfaches Aufdoppeln zu vermeiden, welches die Gerätedicke unnötig erhöhen würde. Insbesondere kann vorgesehen sein, dass die seitlichen Klappflügel einlagig und/oder ohne In-sich-Klappung an das Klappenhauptteil klappbar sind.

Die seitlichen Klappflügel können vorteilhafterweise eine zumindest näherungsweise rechteckige Kontur mit ggf. leicht abgerundeten Eckbereichen besitzen, wobei eine Höhe der seitlichen Flügelklappen im Wesentlichen über ihre gesamte Länge etwa der Höhe des Klappenhauptteils entsprechen kann, so dass die angeklappten Klappflügel den Klappenhauptteil über dessen gesamte Höhe aufdoppeln. Die Länge der seitlichen Klappflügel kann dabei grundsätzlich variieren, wobei die Länge vorteilhafterweise etwa der halben Länge des Klappenhauptteils entsprechen kann, so dass bei Vorhandensein zweier seitlicher Klappflügel diese in der angeklappten Ruhestellung im Wesentlichen vollständig den Klappenhauptteil abdecken.

Um in der ausgeklappten Arbeitsstellung keine Lichtdurchtrittsspalte an den Rändern der Bildschirmoberfläche zu den seitlichen Klappflügeln hin zu haben, andererseits aber die seitlichen Klappflügel ohne In-sich-Faltung und/oder überstandsfrei an den Klappenhauptteil anklappen zu können, kann in Weiterbildung der Erfindung vorteilhafterweise vorgesehen sein, dass die Bildschirmklappe einschließlich ihres zumindest einen seitlichen Klappflügels relativ zur Hüllenbasis quer zur Basisklappachse verschieblich gelagert ist. Die Hüllenbasis kann hierbei einen um die Basisklappachse klappbaren Klappenträger aufweisen, an dem der Klappenhauptteil der Bildschirmklappe verschieblich gelagert ist. Ist die Bildschirmklappe aufgeklappt, kann sie ein Stück weit nach unten auf die Bildschirmoberfläche zu geschoben werden, so dass die seitlich aufgeklappten Klappflügel an den Seitenrändern der Hüllenbasis bzw. des Gerätekorpus vorbei geschoben und diese seitlich einfassen können. Um zusammengeklappt zu werden, kann die Bildschirmklappe im aufgeklappten Zustand bei gelösten Befestigungsmitteln der seitlichen Klappflügel leicht nach oben geschoben werden, so dass die seitlichen Klappflügel über der Bildschirmoberfläche zusammengeklappt und an den Klappenhauptteil angeklappt werden können.

Liegt das Bildschirmgerät mit dem Geräterücken und der daran angebrachten Hüllenbasis beispielsweise auf einem Tisch, kann die Bildschirmklappe bei aufgeklappten Seitenflügeln ein Stück weit nach unten auf den Tisch geschoben werden, bis die seitlichen Klappflügel mit ihren unteren Rändern bündig auf dem Tisch aufliegen. In dieser Arbeitsstellung können die seitlichen Klappflügel dann lösbar an den entsprechenden Schmalseiten der Hüllenbasis bzw. des Bildschirmgeräts befestigt werden. Um die Bildschirmklappe aus dieser Arbeitsstellung wieder zusammenzuklappen in die Ruhestellung, kann die Bildschirmklappe samt der seitlichen Klappflügel nach Lösen deren Befestigungsmittel ein Stück weit vom Tisch nach oben gezogen werden, bis die unteren Kanten der seitlichen Klappflügel über der Bildschirmoberfläche liegen und dann zusammengeklappt werden können.

Die verschiebliche Befestigung der Bildschirmklappe kann vorteilhafterweise mittels einer Schiebeführung zwischen Hüllenbasis und Bildschirmklappe realisiert sein. Insbesondere kann der vorgenannte, um die Basisklappachse klappbare Klappenträger der Hüllenbasis in einem doppelwandigen Schiebeführungsabschnitt des Klappenhauptteils aufgenommen sein, so dass der Klappenhauptteil nebst daran angebrachten Klappflügeln zusammen mit dem Klappenträger um die Basisklappachse verschwenkt werden kann und relativ zu dem Klappenträger in einer Richtung quer zur Basisklappachse verschoben werden kann.

Vorteilhafterweise kann die Basisklappachse etwa in einer durch die Bildschirmoberfläche gehenden Ebene angeordnet sein, um das Zuklappen der Bildschirmklappe in die flächig auf der Bildschirmoberfläche liegende Ruhestellung zu ermöglichen.

Um die ausgeklappte Arbeitsstellung nochmals weiter zu stabilisieren, kann die Verschiebbarkeit der Basisklappe relativ zu dem Klappenträger der Hüllenbasis derart beschaffen sein, dass der Klappenhauptteil, insbesondere dessen doppelwandiger Schiebeführungsabschnitt, über die Basisklappachse geschoben werden kann, um deren Beweglichkeit zu beschränken. In der Arbeitsstellung kann also insbesondere die Basisklappachse des Klappenträgers in dem doppelwandigen Schiebeführungsabschnitt aufgenommen und/oder durch den daran anliegenden Klappenhauptteil ausgesteift und/oder blockiert sein, so dass die Bildschirmklappe in der Sonnenschutzstellung stabiler aufrecht stehen kann.

Alternativ oder zusätzlich zu der vorgenannten Verschieblichkeit der Bildschirmklappe können die seitlichen Klappflügel an ihren unteren Randabschnitten, die benachbart zur Bildschirmoberfläche liegen, auch umklappbare Randfalze besitzen, um ein Zusammenklappen über die Bildschirmoberfläche hinweg zu ermöglichen. Im Bereich der genannten Randfalze sind die seitlichen Klappflügel nicht durch die Flügelklappachsen am Klappenhauptteil befestigt, so dass diese Randfalze gegenüber der Flügelklappachse umgeschlagen werden können. In der ausgeklappten Arbeitsstellung sind die besagten Randfalze zumindest näherungsweise in der Ebene des restlichen Flügelabschnitts angeordnet und können sich entlang der Schmalseiten der Hüllenbasis bzw. des Gerätekorpus erstrecken, um die Bildschirmoberfläche lichtspaltfrei abzudecken.

Die lösbaren Befestigungsmittel zum Befestigen der seitlichen Klappflügel an den Geräte- bzw. Hüllenbasisschmalseiten können grundsätzlich verschieden ausgebildet sein. Beispielsweise können formschlüssig wirkende Rastmittel beispielsweise in Form eines elastisch einfedernden Druckknopfs und/oder in Form eines elastisch verformbaren Rasthakens vorgesehen sein. Alternativ oder zusätzlich können auch kraftschlüssig wirkende Befestigungsmittel beispielsweise in Form eines Haltemagneten als Befestigungsmittel vorgesehen sein. Alternativ oder zusätzlich können auch reibschlüssig wirkende Befestigungsmittel oder Kombinationen aus den vorgenannten Befestigungsmitteln vorgesehen sein, beispielsweise ein Haken- und Plüschteilbefestigungselement und/oder eine federnd ausgebildete Klemmspange.

Vorteilhafterweise besitzen die Befestigungsmittel eine Betätigungsrichtung, d.h. Schließ- und Öffnungsrichtung, die näherungsweise parallel zur Ebene der Bildschirmoberfläche bzw. der Hüllenbasis und näherungsweise senkrecht zu der Schmalseite verläuft, an der der jeweilige seitliche Klappflügel befestigt werden soll. Bei einer solchen Betätigungsrichtung können die Befestigungsmittel einfach durch Verschwenken des jeweiligen Klappflügels um die Flügelklappachse bei aufgerichtetem Klappenhauptteil geschlossen bzw. gelöst werden.

Die Bildschirmklappe einschließlich ihrer seitlichen Klappflügel kann aus einem flächigen, in sich formstabilen Material bestehen, so dass sowohl der Klappenhauptteil als auch die seitlichen Klappflügel jeweils in sich formstabil sind und nur die Basisklappachse sowie die Flügelklappachsen - sowie ggf. die vorgenannte Schiebeachse - Bewegungen der Bildschirmklappe und deren Teile ermöglichen. Vorteilhafterweise können genau drei Klappachsen vorgesehen sein, nämlich die vorgenannte Basisklappachse sowie die beiden seitlichen Flügelklappachsen, wobei bei nur einem seitlichen Klappflügel auch nur zwei Klappachsen vorgesehen sein können, nämlich die Basisklappachse sowie die dann eine Flügelklappachse.

Beispielsweise kann die Schutzhülle, insbesondere deren Bildschirmklappe aus einem formstabilen Kunststoffwerkstoff bestehen, wobei der Klappenhauptteil und die seitlichen Klappflügel jeweils eine ebene, flächige, insbesondere etwa plattenförmige Ausbildung besitzen können.

Die Erfindung wird nachfolgend anhand eines vorteilhaften Ausführungsbeispiels und zugehöriger Zeichnungen näher erläutert. In den Zeichnungen zeigen:

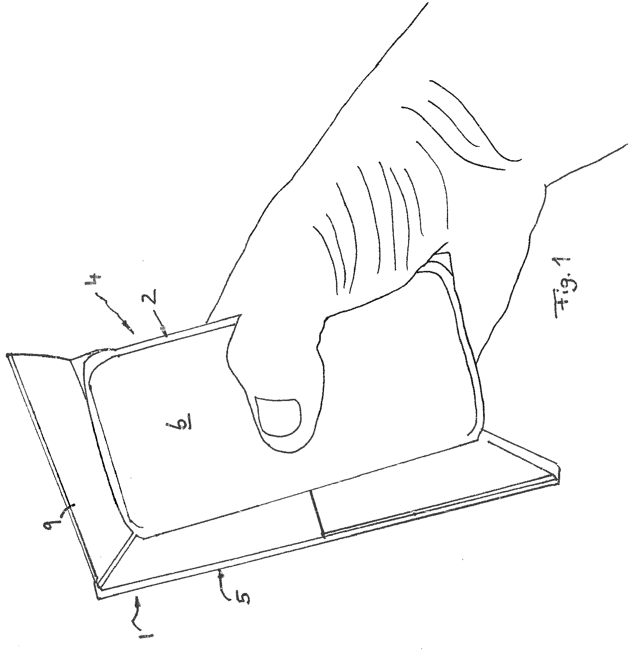

- Fig. 1:: eine schematische, perspektivische Darstellung eines Mobiltelefons mit einer daran angebrachten Schutzhülle nach einer vorteilhaften Ausführung der Erfindung in einer Arbeitsstellung, in der die Bildschirmklappe der Schutzhülle als zweiseitiger Sonnen- und Blickschutz konfiguriert ist, wobei ein weiterer Seitenflügel der Bildschirmklappe nicht ausgeklappt wurde,
- Fig. 2:: eine perspektivische, schematische Darstellung des Bildschirmgeräts aus Fig. 1 mit der daran angebrachten Schutzhülle in einer vollständig ausgeklappten, als Sonnenschutz dienenden Arbeitsposition, in der zwei seitlich angebrachte Klappflügel an Schmalseiten des Geräts befestigt und der Bildschirm dreiseitig umschlossen ist,
- Fig. 3:: eine perspektivische, schematische Darstellung der Schutzhülle aus den Figuren 1 und 2 in einer Übergangsstellung, in der die seitlichen Klappflügel von den Schmalseiten des Bildschirmgeräts gelöst sind und der Hauptkorpus der Bildschirmklappe ein Stück weit nach oben verschoben wurde, so dass die seitlichen Klappflügel über der Bildschirmoberfläche zusammengeklappt werden können,
- Fig. 4:: eine schematische, perspektivische Darstellung der Schutzhülle ähnlich Fig. 3 in einer weiter umgeklappten Übergangsstellung,
- Fig. 5:: eine perspektivische, schematische Darstellung der Schutzhülle aus den vorhergehenden Figuren, wobei einer der seitlichen Klappflügel bereits zusammengeklappt wurde, während der andere seitliche Klappflügel noch ausgeklappt ist, und
- Fig. 6:: eine schematische, perspektivische Darstellung der Schutzhülle in ihrer Ruhestellung, in der die Bildschirmklappe auf den Bildschirm des Mobiltelefons bzw. Tablets geklappt ist.

Wie die Figuren zeigen, umfasst die Schutzhülle 1 eine Hüllenbasis 2 mit einem Basisrahmen 3, dessen Konturierung näherungsweise den Außenabmessungen des aufzunehmenden Bildschirmgeräts 4 entspricht. Insbesondere kann der genannte Basisrahmen 3 das flache Bildschirmgerät 4 auf dessen vier Schmalseiten einfassen und umgreifen, wobei der Basisrahmen 3 elastisch ausgebildete Halteklammern und/oder Umgriffselemente aufweisen kann, um stabil sitzend am Umfang des Bildschirmgeräts 4 befestigt werden zu können.

Vorteilhafterweise kann die Hüllenbasis 2 insgesamt wannenförmig ausgebildet sein bzw. eine Basiswanne bilden, in die der Gerätekorpus des Bildschirmgeräts 4 hinein gelegt werden kann, so dass dessen Rückseite vom Boden der Hüllenwanne abgedeckt und die Schmalseiten von dem vorgenannten Basisrahmen 3 umgriffen werden.

An der genannten Hüllenbasis 2 ist eine Bildschirmklappe 5 klappbar angebracht, die dazu vorgesehen ist, in der zusammengeklappten Ruhestellung den Bildschirm 6 des Geräts 4 im Wesentlichen vollständig abzudecken, wobei die Bildschirmklappe 5 in der genannten Ruhestellung vorteilhafterweise flächig auf den Bildschirm aufliegen kann. Gegebenenfalls kann die Bildschirmklappe 5 auch nur umlaufend auf dem Basisrahmen 3 aufliegen, so dass gegenüber der Bildschirmoberfläche ein geringfügiger Spalt verbleibt. Vorteilhafterweise kann der Basisrahmen 3 ringfömig und/oder umlaufend geschlossen ausgebildet sein, so dass bei geschlossener Bildschirmklappe 5 der Bildschirm 6 spaltfrei vollständig gegen Schmutz und Staub geschützt ist.

Wie die Figuren zeigen, kann die Bildschirmklappe 5 um eine Basisklappachse 7 aufgeklappt und gegenüber der Hüllenbasis 2 verschwenkt werden, wobei sich die genannte Basisklappachse 7 parallel zu einer der Schmalseiten des Bildschirmgeräts 4 erstrecken kann, insbesondere entlang einer der längeren Schmalseiten des Bildschirmgeräts 4, so dass bei hochformatigem Halten des Bildschirmgeräts 4 die Bildschirmklappe 5 nach links oder rechts aufgeklappt werden kann.

Die Bildschirmklappe 5 umfasst dabei einen Klappenhauptteil 8, der sich entlang der besagten Basisklappachse 7 erstreckt und im Wesentlichen rechteckig ausgebildet ist. Der Klappenhauptteil 8 kann hinsichtlich seines Formats im Wesentlichen der Flachseite bzw. dessen Format entsprechen, so dass der genannte Klappenhauptteil 8 in der zusammengeklappten Ruhestellung, in der er auf dem Bildschirm 6 liegt, die Gerätevorderseite des Bildschirmgeräts 4 vollständig abdeckt und mit dem Gerätekorpus bzw. der Hüllenbasis 2 näherungsweise bündig abschließt.

An dem genannten Klappenhauptteil 8 sind seitlich, d.h. an den Seiten, die sich quer zu der vorgenannten Basisklappachse 7 erstrecken, zwei seitliche Klappflügel 9 und 10 befestigt, die an dem Klappenhauptteil 8 um Flügelklappachsen 11 und 12 klappbar angebracht sind. Die genannten Flügelklappachsen 11 und 12 erstrecken sich dabei näherungsweise senkrecht zu der vorgenannten Basisklappachse 7 an den seitlichen Rändern des Klappenhauptteils 8.

Die seitlichen Klappflügel 9 und 10 können dabei integral einstückig an das Klappenhauptteil 8 angeformt sein, wobei die Flügelklappachsen 11 und 12 beispielsweise durch eine Prägung des Klappenmaterials und/oder eine Ausdünnung des Klappenmaterials gebildet sein kann. Insbesondere kann ein Filmscharnier aus Kunststoffmaterial zwischen den seitlichen Klappflügeln 9 und 10 und dem Klappenhauptteil 8 vorgesehen sein, welches Filmscharnier materialhomogen und/oder einstückig an das Material des Klappenhauptteils 8 und/oder der Klappflügel angeformt sein kann. Grundsätzlich ist es aber auch möglich, ein separates Scharnier, beispielsweise in Form eines Filmscharniers separat an dem Klappenhauptteil und den Klappflügeln zu befestigen, beispielsweise festzukleben und/oder anzuschweißen.

Die genannten Klappflügel 9 und 10 können hinsichtlich ihrer Abmessungen und/oder ihres Formats vorteilhafterweise jeweils etwa einem halben Klappenhauptteil 8 entsprechen, so dass die beiden Klappflügel 9 und 10 in der zusammengeklappten Ruhestellung, in der sie auf dem Klappenhauptteil 8 aufliegen bzw. daran angeklappt sind, zusammen etwa dem Format des Klappenhauptteils 8 entsprechen und diesen vollständig abdecken.

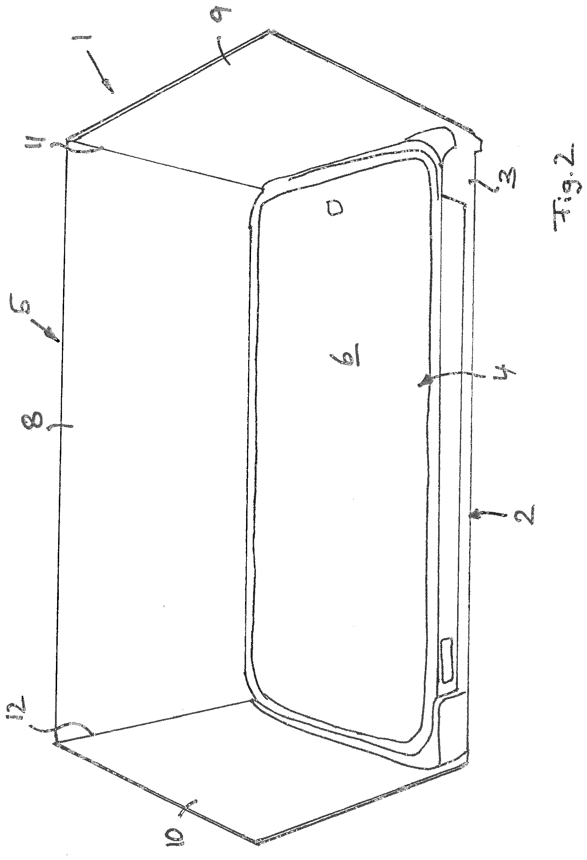

Wie ein Vergleich der Figuren 2, 3 und 4 verdeutlicht, kann die Bildschirmklappe 5 zusätzlich zur Bewegung um die Basisklappachse 7 gegenüber der Hüllenbasis 2 auch noch verschoben werden, und zwar entlang einer Schiebeachse 13, die sich im Wesentlichen quer zu der Basisklappachse 7 erstreckt. Hierbei kann die Hüllenbasis 2 einen Klappenträger 14 umfassen, der sich nach Art eines Buchrückens entlang der Schmalseite des Bildschirmgeräts 4 erstreckt, an der die Basisklappachse 7 angeordnet ist, wobei der genannte Klappenträger 14 die genannte Basisklappachse 7 aufweisen kann, beispielsweise in Form eines Filmscharniers, das durch Ausdünnung und/oder Prägung oder in anderer Weise in das Material des Klappenträgers 14 eingearbeitet oder daran befestigt sein kann.

An dem besagten Klappenträger 14, der sich entlang der gesamten Schmalseite des Bildschirmgeräts 4 erstrecken kann, aber auch nur einen streifenförmigen Teilbereich oder mehrere Scharnierstreifen umfassen kann, kann die Bildschirmklappe 5 verschieblich durch eine Schiebeführung 15 gelagert sein, deren Bewegungsachse die vorgenannte Schiebeachse 13 bildet. Insbesondere kann er Klappenhauptteil 8 zumindest abschnittsweise doppelwandig ausgebildet und über den zuvor genannten Klappenträger 14 geschoben sein, so dass dieser sandwichartig zwischen den beiden Wandungen des doppelwandigen Klappenhauptteils 8 aufgenommen ist.

Die genannte Schiebeführung 15 kann dabei Bewegungsbegrenzer aufweisen, beispielsweise einen in einem Langloch laufenden Anschlag, um die Schiebebewegung der Bildschirmklappe 5 relativ zur Hüllenbasis 2 zu begrenzen.

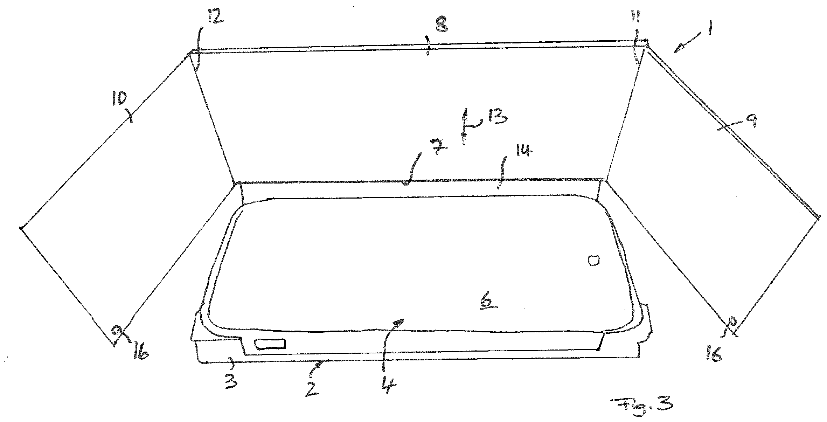

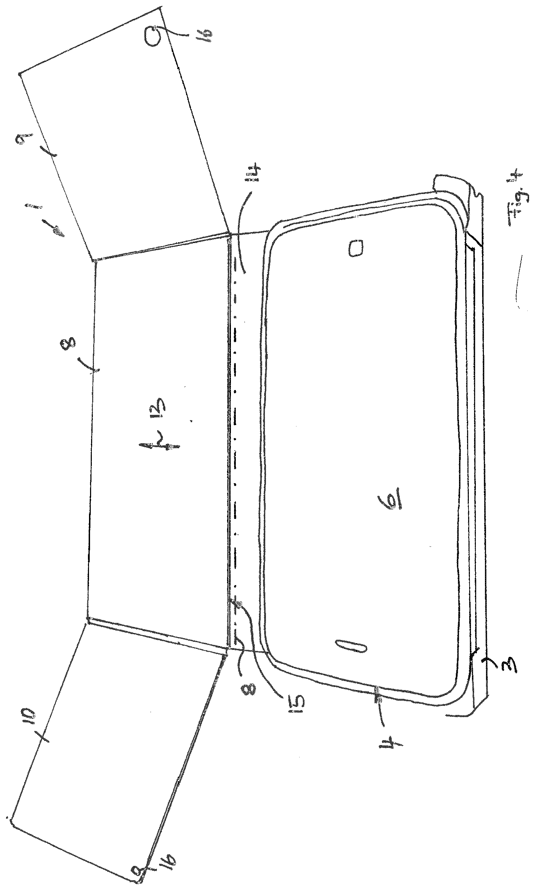

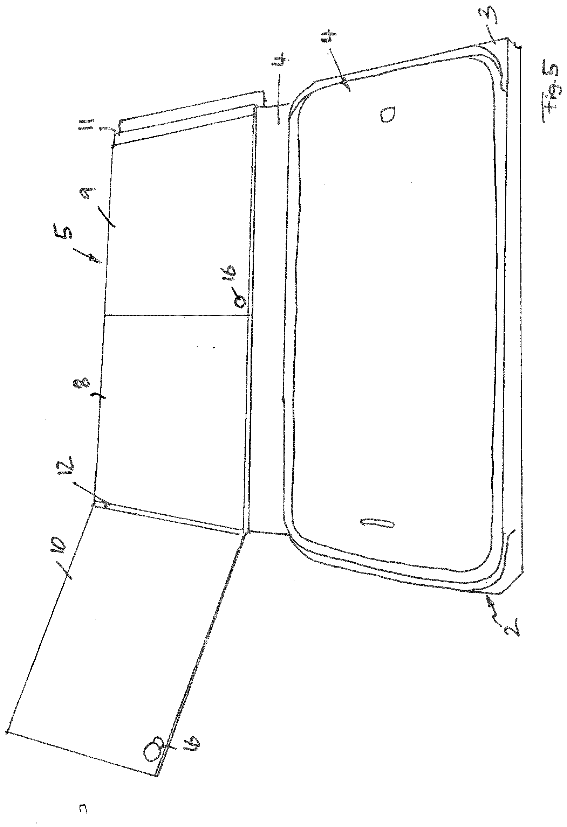

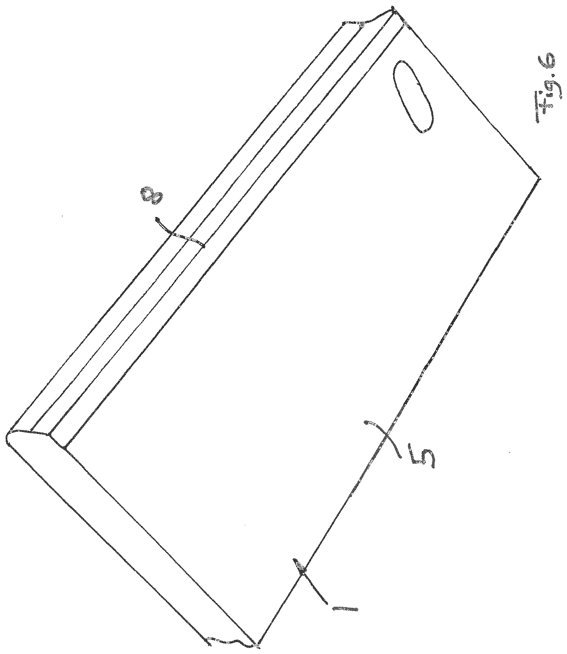

Wie die Figuren verdeutlichen, erstreckt sich die Basisklappachse 7 in der zusammengeklappten Ruhestellung der Schutzhülle 1 gemäß Fig. 6 im Wesentlichen entlang eines unteren Randabschnitts des Klappenhauptteils 8, der an dem Klappenträger 14 befestigt ist. Wird die Bildschirmklappe 5 aus dieser Ruhestellung um die Basisklappachse 7 aufgeklappt, wie dies beispielsweise die Fig. 4 oder Fig. 5 verdeutlicht, erstreckt sich ein Teil des Klappenträgers 14 mitsamt der Basisklappachse 7 außerhalb des Klappenhauptteils 8 bzw. wird die Basisklappachse 7 vom Klappenhauptteil 8 nicht überdeckt. Um die Schutzhülle 1 für die beabsichtigte Arbeitsstellung zu stabilisieren und/oder die seitlichen Klappflügel spaltfrei an den angrenzenden Schmalseiten des Geräts anbringen zu können, kann die Bildschirmklappe 5 über die zuvor erläuterte Schiebeführung 15 auf die Hüllenbasis 2 zu bzw. das Bildschirmgerät zu verschoben werden. Liegt das Bildschirmgerät 4 beispielsweise mit seinem Rücken auf einem Tisch wie in Fig. 3 gezeigt, kann der Klappenhauptteil 8 in aufgerichteter Stellung bei ausgeklappten Seitenflügeln nach unten auf den Tisch geschoben werden, bis die seitlichen Klappflügel 9 und 10 mit ihren unteren Rändern auf der Tischoberfläche aufstehen.

Durch Anklappen der seitlichen Klappflügel 9 und 10 an die kürzeren Schmalseiten der Hüllenbasis 2 wird ein dreiseitiger Sonnen- und Blickschutz geschaffen. Dabei können die seitlichen Klappflügel 9 und 10 an den entsprechenden Schenkeln des Basisrahmens 3 und/oder an dem Bildschirmgerät 4 selbst befestigt werden. Die hierfür vorgesehenen Befestigungsmittel 16 können vorteilhafterweise an von den Flügelklappachsen 11 und 12 beabstandeten Endabschnitten der Klappflügel 9 und 10 vorgesehen sein, um einen günstigen Hebelarm zu haben und mit geringen Haltekräften die seitlichen Klappflügel halten zu können. Die genannten Befestigungsmittel 16 können beispielsweise einen elastischen Schnappverschluss beispielsweise in Form eines Druckknopfes umfassen, der mit komplementären Befestigungsmitteln am Basisrahmen 3 verriegelt werden kann.

## Patentansprüche

1. Schutzhülle für flache Bildschirmgeräte (4) wie Mobiltelefone und Tablets, mit einer Hüllenbasis (2), die an einem Gerätekorpus des Bildschirmgeräts befestigbar ist, sowie einer Bildschirmklappe (5), die an der Hüllenbasis (2) um eine Basisklappachse (7), die sich entlang einer Schmalseite der Hüllenbasis (2) erstreckt, klappbar befestigt und zum Abdecken des Bildschirms des Bildschirmgeräts (4) in eine Ruhestellung an die Hüllenbasis (2) anklappbar ist, **dadurch gekennzeichnet, dass** die Bildschirmklappe (5) zumindest einen ausklappbaren seitlichen Klappenflügel (9, 10) aufweist, der um eine sich quer zur Basisklappachse (7) verlaufende Flügelklappachse (11, 12) ausklappbar an einem Klappenhauptteil (8) der Bildschirmklappe (5) angebracht ist und lösbare Befestigungsmittel (16) zum Befestigen in einer ausgeklappten Arbeitsstellung an einer zweiten Schmalseite der Hüllenbasis (2) und/oder des Gerätekorpus aufweist, so dass in der Arbeitsstellung die Bildschirmklappe einen von der Hüllenbasis (2) hochstehenden, zumindest zwei Schmalseiten der Hüllenbasis (2) seitlich einfassenden Sonnen- und Blickschutz bildet und in der zusammengeklappten Ruhestellung der zumindest eine seitliche Klappflügel vollständig an den Klappenhauptteil (8) angeklappt ist.

2. Schutzhülle nach dem vorhergehenden Anspruch, wobei an dem Klappenhauptteil (8) zwei ausklappbare seitliche Klappflügel (9 und 10) angebracht sind, die an gegenüberliegenden Enden des Klappenhauptteils (8) ausklappbar angeordnet und jeweils an eine Schmalseite der Hüllenbasis (2) oder des Gerätekorpus anklappbar und mittels lösbarer Befestigungsmittel (16) befestigbar sind, so dass in der ausgeklappten Arbeitsstellung die Bildschirmklappe (5) einen von der Hüllenbasis (2) hochstehenden Sonnen- und Blickschutz bildet, der die Hüllenbasis (2) entlang dreier Seiten einfasst.

3. Schutzhülle nach einem der vorhergehenden Ansprüche, wobei die Bildschirmklappe (5) relativ zur Hüllenbasis (2) quer zur Basisklappachse (7) verschieblich gelagert ist, wobei die Hüllenbasis (2) einen um die Basisklappachse (7) klappbaren Klappenträger (14) aufweist, an dem der Klappenhauptteil der Bildschirmklappe (5) verschieblich gelagert ist.

4. Schutzhülle nach dem vorhergehenden Anspruch, wobei der Klappenhauptteil (8) einen doppelwandigen Schiebeführungsabschnitt aufweist, in dem der Klappenträger (14) der Hüllenbasis (2) verschieblich aufgenommen ist.

5. Schutzhülle nach einem der beiden vorhergehenden Ansprüche, wobei die Basisklappachse (7) in der zusammengeklappten Ruhestellung der Schutzhülle (1) etwa auf Höhe einer Bildschirmoberflächenebene angeordnet ist und der Klappenhauptteil (8) über die genannte Basisklappachse (7) in die Arbeitsstellung schiebbar ist und in der Arbeitsstellung die genannte Basisklappachse (7) überdeckt, wodurch die Basisklappachse (7) blockierbar und/oder schwergängiger gemacht ist.

6. Schutzhülle nach einem der vorhergehenden Ansprüche, wobei der Klappenhauptteil (8) und der zumindest eine seitliche Klappenflügel (9, 10) jeweils als formstabiles Plattenteil ausgebildet sind.

7. Schutzhülle nach einem der vorhergehenden Ansprüche, wobei der Klappenhauptteil (8) rechteckig konturiert ist und mit seinen Abmessungen im Wesentlichen den Abmessungen der Hüllenbasis (2) und/oder den Abmessungen des Gerätekorpus des Bildschirmgeräts (4) entspricht.

8. Schutzhülle nach einem der vorhergehenden Ansprüche, wobei der zumindest eine seitliche Klappenflügel (9, 10) rechteckig konturiert ist und mit seinen Abmessungen im Wesentlichen der Hälfte des Klappenhauptteils (8) entspricht, wobei der Klappflügel (9, 10) und der Klappenhauptteil (8) entlang der Flügelklappachse (11, 12) im Wesentlichen dieselbe Erstreckung besitzen.

9. Schutzhülle nach einem der vorhergehenden Ansprüche, wobei der Klappenhauptteil (8) und der zumindest eine seitliche Klappflügel (9, 10) im Wesentlichen aus demselben Material bestehen und/oder im Wesentlichen dieselbe Materialdicke besitzen.

10. Schutzhülle nach einem der vorhergehenden Ansprüche, wobei die Basisklappachse (7) und/oder die zumindest eine Flügelklappachse (11, 12) als Filmscharnier ausgebildet ist.

11. Schutzhülle nach dem vorhergehenden Anspruch, wobei das genannte Filmscharnier integral einstückig, materialhomogen an die Bildschirmklappe (5) angeformt, insbesondere durch Materialprägung und/oder -ausdünnung gebildet ist.

12. Schutzhülle nach einem der vorhergehenden Ansprüche, wobei die lösbaren Befestigungsmittel (16) zum Befestigen des zumindest einen seitlichen Klappflügels (11, 12) in dessen ausgeklappter Arbeitsstellung an der Schmalseite der Hüllenbasis (2) und/oder des Gerätekorpus ein formschlüssig arbeitendes, elastisch ausgebildetes Rastelement umfasst.

13. Schutzhülle nach einem der vorhergehenden Ansprüche, wobei die lösbaren Befestigungsmittel (16) zum Befestigen des zumindest einen seitlichen Klappflügels (11, 12) in dessen ausgeklappter Arbeitsstellung an der Schmalseite der Hüllenbasis (2) und/oder des Gerätekorpus ein kraftschlüssig wirkendes Halteelement umfasst.

14. Schutzhülle nach einem der vorhergehenden Ansprüche, wobei die lösbaren Befestigungsmittel (16) an einem der Flügelklappachse (11, 12) gegenüberliegenden, freien Endabschnitt des Klappflügels (9, 10) vorgesehen sind.

15. Bildschirmgerät, insbesondere Mobiltelefon oder Tablet, mit einer Schutzhülle, die nach einem der Ansprüche 1-14 ausgebildet ist.
